# DEMANDE DE BREVET EUROPEEN

(11) **EP 1 727 241 A2**
(43) Date de publication de la demande: **29.11.2006**
(21) Numéro de dépôt: 06290853.8
(22) Date de dépôt: 29.05.2006
(51) Int. Cl.: H01R 11/28

(54) **Assemblage d'une cosse de batterie et d'une sonde, notamment thermique**

(30) Priorité: 27.05.2005 FR 0505371
(71) Demandeur: Valeo Electronique et Systemes de Liaison, 78180 Montigny le Bretonneux (FR)
(72) Inventeur: Moly, José, 31150 Gratentour (FR)
(74) Mandataire: Eidelsberg, Olivier Nathan

(57) **Abrégé**

Assemblage comportant une cosse de batterie et une sonde, notamment thermique, la cosse ayant un fût en un matériau conducteur de l'électricité destiné à entourer une borne de batterie, caractérisé en ce que le fût (1) comporte dans sa paroi latérale une ouverture (14) dans laquelle est reçue la sonde (15) et il est prévu des moyens de maintien de la sonde dans l'ouverture.

## Description

La présente invention se rapporte a un assemblage comportant une cosse de batterie d'accumulateurs et une sonde, notamment thermique destiné à venir en contact électrique avec une borne de la batterie d'un véhicule automobile, ainsi qu'à un véhicule automobile comportant un assemblage de ce genre.

On souhaite obtenir un montage simple et fiable d'une sonde pour mesurer des données relatives à une batterie.

Suivant l'invention, un assemblage est tel que défini à la revendication 1.

On obtient ainsi un moyen particulièrement simple de fixer une sonde, notamment thermique, en contact avec une borne de batterie en vue d'en surveiller des paramètres de fonctionnement, tel que par exemple la température.

Des perfectionnements et des modes de réalisations avantageux font l'objet des sous revendications 2 à 8.

La présente invention vise également un véhicule automobile suivant la revendication 9.

L'invention va maintenant être décrite avec plus de détails en se référant à un mode de réalisation particulier donné à titre d'exemple seulement et représenté aux dessins annexés.

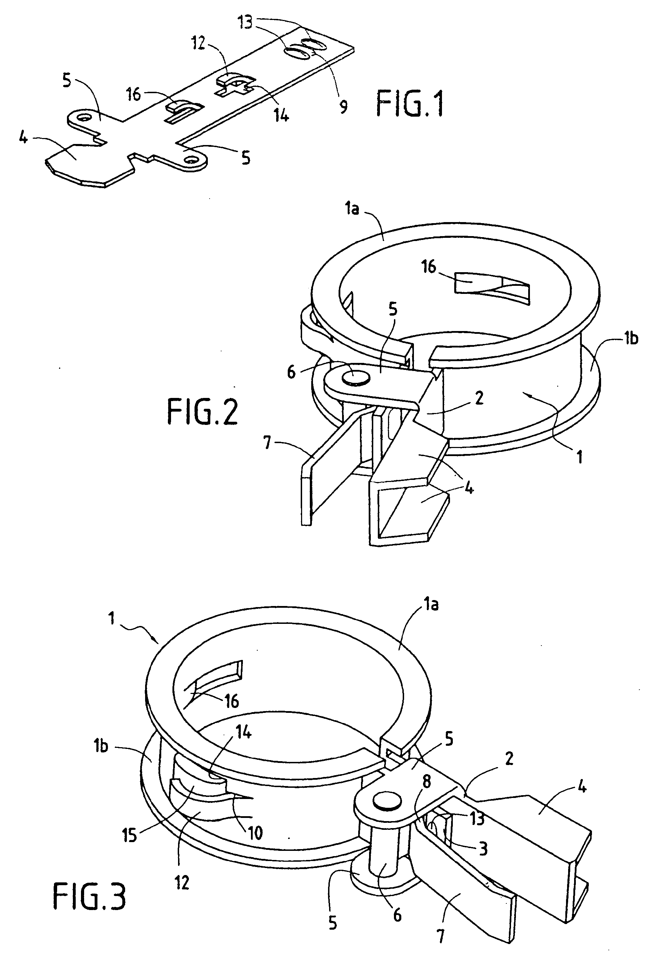

Figure 1 est une vue en perspective d'un flan découpé pour réaliser la cosse selon l'invention.

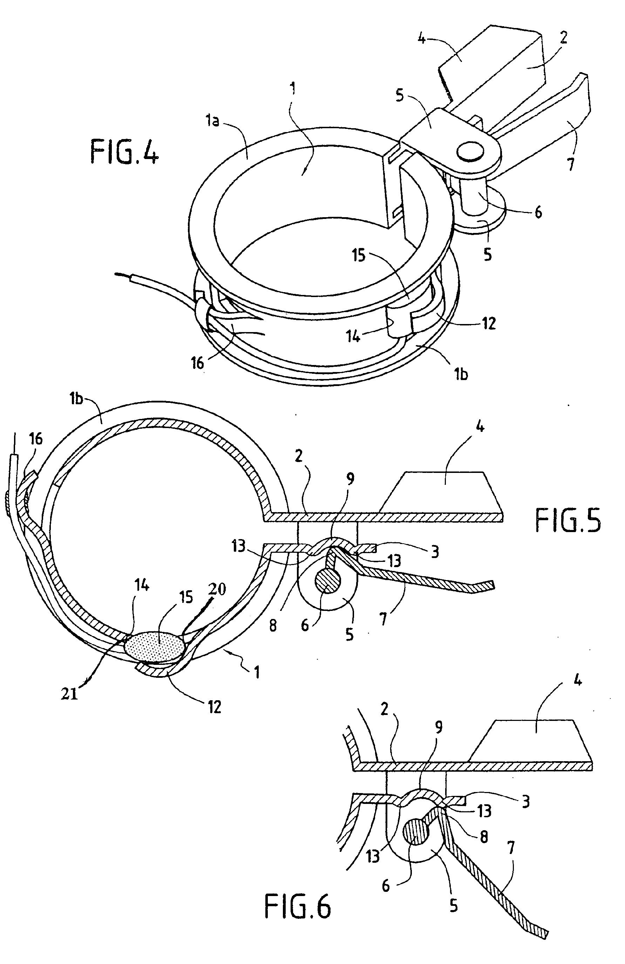

Figure 2, figure 3 et figure 4 sont des vues en perspective de la cosse selon l'invention.
Figure 5 est une vue en coupe par un plan perpendiculaire à l'axe de la cosse.
Figure 6 est une vue agrandie d'un détail.

La cosse représentée aux figures est réalisée à partir d'une bande métallique bonne conductrice de l'électricité découpée et pliée pour présenter un fût 1 bordé par deux rebords 1a et 1b, et prolongé par deux pattes 2 et 3. Suivant une autre forme de réalisation possible, la cosse pourrait être réalisée par moulage.

La patte 2 est terminée par deux barrettes de sertissage 4 pour assurer la fixation d'un câble. Ce couvercle pouvant être de couleur ou présenté un marquage.

La patte 2 comporte également deux barreaux 5 pliés de manière à s'étendre vers l'extérieur de la patte 3 afin de former une chape supportant un axe 6 solidaire, d'une part, d'un levier 7 et, d'autre part, d'une came 8.

La patte 3 présente deux bossages 13 séparés par un cran 9.

Lorsque que la cosse est placée sur la borne d'une batterie, pour assurer la fixation et le serrage de la cosse sur ladite borne, on fait basculer le levier 7 de manière que la came 8 en coopérant avec le bossage 13 rapproche les deux pattes 2 et 3 l'une de l'autre afin de réduire le diamètre du fût 1.

Le fût 1 comporte une première découpe 10 déterminant une languette 12 et, transversalement, une ouverture 14 traversant la paroi latérale du fût de la cosse.

Dans l'ouverture 14, une sonde 15 de mesure de la température de la batterie est reçue. Elle est maintenue en place par la languette 12, qui la presse contre les bords 20 et 21 latéraux de l'ouverture 14, la dimension en largeur de la sonde étant supérieure à la largeur de l'ouverture 14 (c'est à dire la distance entre les deux bords 20 et 21 latéraux). La dimension relative de la sonde par rapport à celle de l'ouverture peut en particulier être choisi, comme à la figure 5, pour qu'une partie de la sonde fasse saillie au delà de la paroi latérale du fût à l'intérieur de la cosse. De préférence, comme également à la figure 5, la dimension de la sonde est cependant choisie pour qu'elle ne puisse pas passer à travers l'ouverture 14 et qu'elle soit maintenue en butée contre les bords latéraux 20 et 21.

Suivant un autre mode de réalisation possible, la sonde a une dimension très légèrement supérieur à celle de l'ouverture 14 de sorte qu'elle est maintenue entre les deux bords latéraux par adaptation serrée.

Suivant encore une autre possibilité, on peut prévoir un surmoulage, par exemple en matière thermoplastique, enrobant au moins en partie, de préférence complètement, la surface extérieure de la cosse. En particulier ce surmoulage, lorsqu'il est appliqué après positionnement de la sonde dans l'ouverture, peut avoir pour fonction de maintenir la sonde contre les bords de l'ouverture 14. Dans ce cas, la languette 12 n'est pas nécessaire, sa fonction de maintien étant réalisée par le surmoulage.

Au voisinage de la languette 12 est découpée une seconde languette 16 qui permet la fixation des fils de sortie de la sonde.

Suivant un autre mode de réalisation possible, les moyens de transmission des données de la sonde ne sont pas filaires mais à base d'une émission-réception hertzienne ou par courant porteur, les fils de sortie mentionnés ci dessus n'étant alors pas nécessaires.

On peut prévoir un couvercle en matière plastique s'emboîtant élastiquement sur le rebord 1a.

Lorsque l'on presse la cosse pour serrer le fût contre la borne, notamment par l'intermédiaire du levier 7, en vue d'assurer un contact électrique, il peut y avoir, notamment dans le cas où la sonde fait saillie à l'intérieur du fût, une légère déformation de celui ci pour faire en sorte que à la fois la sonde et la paroi intérieure du fût soient en contact avec la borne enserrée.

On entend suivant l'invention par dimension dans la direction périphérique la dimension mesurée le long de la paroi interne du fût dans le plan de section transversale correspondant au plan de la figure 5.

Bien entendu, l'invention n'est pas limitée au mode de réalisation qui vient d'être décrit et représenté. On pourra y apporter de nombreuses modifications de détail sans sortir pour cela du cadre de l'invention. En particulier, les différents modes de réalisation peuvent être combinés entre eux pour obtenir des modes de réalisations supplémentaires qui font partie de l'invention. Une ou des caractéristiques d'un mode de réalisation peuvent être combinées à un autre mode de réalisation ne comportant pas cette ou ces caractéristiques pour obtenir un nouveau mode de réalisation faisant partie de la présente invention.

## Revendications

1. Assemblage comportant une cosse de batterie et une sonde, notamment thermique, la cosse ayant un fût en un matériau conducteur de l'électricité destiné à entourer une borne de batterie, **caractérisé en ce que** le fût (1) comporte dans sa paroi latérale une ouverture (14) dans laquelle est reçue la sonde (15) et il est prévu des moyens de maintien de la sonde dans l'ouverture.

2. Assemblage, selon la revendication 1, **caractérisé en ce que** les moyens de maintien sont agencés de manière à maintenir la sonde dans l'ouverture de sorte qu'une partie de celle ci fasse saillie de l'ouverture à l'intérieur du fût (1).

3. Assemblage suivant la revendication 1 ou 2, **caractérisée en ce que** les moyens de maintien comporte une languette (12) issue de la cosse.

4. Assemblage suivant l'une des revendications 1 à 3, **caractérisé en ce que** la dimension de l'ouverture dans la direction périphérique de la cosse est inférieure à celle de la sonde, notamment légèrement inférieure.

5. Assemblage suivant l'une quelconque des revendications précédentes, **caractérisé en ce que** le fût est issu de moulage.

6. Assemblage suivant l'une quelconque des revendications précédentes, **caractérisé en ce que** il est prévu un surmoulage en un matériau non conducteur de l'électricité, notamment en matière thermoplastique, enveloppant au moins en partie la cosse.

7. Assemblage selon la revendication 6, **caractérisé en ce que** le surmoulage fait partie des moyens de maintien.

8. Assemblage suivant l'une quelconque des revendications précédentes, **caractérisé en ce que** il est prévu des moyens de transmission des données de la sonde vers un système central de gestion de la batterie.

9. Véhicule automobile comportant une batterie ayant une borne et un assemblage suivant l'une quelconque des revendications précédentes, **caractérisé en ce que** la sonde est maintenue en contact avec la borne.
